# EUROPEAN PATENT SPECIFICATION

(11) **EP 2 889 553 B1**
(45) Date of publication and mention of the grant of the patent: **24.08.2016**
(21) Application number: 14198486.4
(22) Date of filing: 17.12.2014
(51) Int. Cl.: F25B 9/00, F16K 31/40, F25B 41/04

(54) **Flow control valve, refrigerating system and method for controlling the same**
Durchflussregelventil, Kühlsystem und Verfahren zur Steuerung davon
Soupape de régulation de débit, système de réfrigération et procédé de commande associé

(30) Priority: 20.12.2013 CN 201310710781
(43) Date of publication of application: 01.07.2015
(73) Proprietor: Hangzhou Sanhua Research Institute Co., Ltd., Hangzhou, Zhejiang 310018 (CN)
(72) Inventor: Zhang, Rongrong, HANGZHOU Zhejiang 310018 (CN); Stanke, Edwin, HANGZHOU Zhejiang 310018 (CN); Wang, Hui, HANGZHOU Zhejiang 310018 (CN); Qi, Xiaowei, HANGZHOU Zhejiang 310018 (CN)
(74) Representative: Lavoix

(56) References cited:
- EP-A1- 0 664 425
- EP-A2- 1 403 577
- JP-A- H11 316 068
- US-B1- 6 289 930

## Description

### TECHNICAL FIELD

The present application relates to a refrigerating system, and particularly to a flow control valve with an electronic expansion valve, a refrigerating system and a method for controlling the flow control valve.

### BACKGROUND

Carbon dioxide is an environmentally friendly refrigerant with a Global Warming Potential (GWP) value of 1 and an Ozone Depletion Potential (ODP) value of 0, and is considered as a good vehicle air conditioning refrigerant. However, there are many differences between the carbon dioxide and other refrigerants. In one aspect, system working principles are different, the carbon dioxide works in a supercritical state in a vehicle air conditioning system, and thus the working principle of the carbon dioxide system is different from that of other conventional refrigerant systems. In another aspect, compared to methods for controlling the degree of superheat in the conventional refrigerant systems, the flow control of the carbon dioxide refrigerant system is also different, in detail, the efficiency of the carbon dioxide system relies greatly on a pressure at a high pressure side of the refrigerant in the system and the outlet temperature of a gas cooler, thus the optimal flow control of the carbon dioxide system is also determined by the outlet temperature and the outlet pressure of the gas cooler.

Since the flow control of the carbon dioxide system is complicated, it is hard to achieve the optimal flow control by a conventional mechanical expansion valve or a throttle valve. In an electronic expansion valve, the outlet pressure and the outlet temperature of the gas cooler can be collected by a pressure sensor and a temperature sensor, and then calculated by a controller to be used to control the flow of the system, therefore the electronic expansion valve is an optimal solution for flow control of the carbon dioxide system.

In summary, the carbon dioxide being used in the vehicle air conditioning system as a refrigerant meets the requirements of the market, and also, the flow control realized by the electronic expansion valve may meet higher control requirements. However, when the vehicle is de-energized in a collision, the electronic expansion valve is de-energized and cannot shut off the refrigerating system, and in this case, the carbon dioxide refrigerant at the high pressure side may leak to a low pressure side and is easy to leak to a compartment of the vehicle, which will cause the passengers to be suffocated in the compartment.

Therefore, it is necessary to improve the conventional technology so as to address the above technical issues.

US6289930 B1 discloses a combined piston orifice valve and solenoid valve in which a solenoid valve is aligned radially with respect a piston orifice valve. The solenoid valve and the piston orifice valve are combined by a junction block. The solenoid valve includes a magnetic coil, a solenoid plunger, and a spring. The piston orifice valve includes an exit port, a lower housing portion, and a piston disposed in a generally cylindrical chamber defined in the housing portion. An orifice extends through the piston along the axis thereof, and the piston has a sealing gasket provided in a groove encircling a frustro-conical forward surface spaced apart from the periphery of the piston and located to come into sealing contact with a sealing portion of the chamber wall. A pathway is provided between an axially disposed entry port and the piston orifice, and the solenoid plunger is adapted to close the pathway by coming into contact with a sealing surface within the junction block. When the piston is forced forward by refrigerant liquid flow), the gasket and the sealing portion come into contact, forming a leak-proof seal so that fluid flow occurs only through orifice. When the fluid flow occurs in the reverse direction, the piston moves backward to a rearward position limited by a periphery of a stop member connected to the housing by a nut so that the flow proceeds through flutes, the orifice and the pathway.

### SUMMARY

An object of the present application is to provide a flow control valve, which is capable of shutting off a refrigerant flow passage when being de-energized, to prevent the refrigerant from leaking.

For realizing the above object, the following technical solutions are adopted in the present application. A flow control valve, includes an electronic expansion valve, wherein the electronic expansion valve includes a coil of the electronic expansion valve, a valve core of the electronic expansion valve, a first valve body, a first refrigerant flow passage, and a first valve port located in the first refrigerant flow passage and corresponding to the valve core of the electronic expansion valve, and the valve core of the electronic expansion valve moves with respect to the first valve port to control an opening degree of the first valve port, wherein the flow control valve further includes a normally closed solenoid valve, the solenoid valve includes a coil of the solenoid valve, a valve core of the solenoid valve, a second valve body and a second refrigerant flow passage; the valve core of the solenoid valve communicates the second refrigerant flow passage with the first refrigerant flow passage in a case that the coil of the solenoid valve is energized; and the valve core of the solenoid valve shuts off the second refrigerant flow passage from the first refrigerant flow passage in a case that the coil of the solenoid valve is de-energized, and the electronic expansion valve is integrated with the solenoid valve, the flow control valve includes a valve component, the valve component includes the first valve body and the second valve body, the valve component is provided with a refrigerant flow passage, a first valve core mounting cavity for the electronic expansion valve, a second valve core mounting cavity for the solenoid valve and a first valve port mounting cavity; the refrigerant flow passage includes the first refrigerant flow passage and the second refrigerant flow passage, the refrigerant flow passage includes an inlet cavity, a communicating cavity, an outlet cavity; the first valve core mounting cavity is in communication with the communicating cavity and the first valve port mounting cavity; the valve core of the solenoid valve is movable to communicate the second valve core mounting cavity with the inlet cavity and the communicating cavity or shut off the second valve core mounting cavity from the inlet cavity and the communicating cavity; and the first valve port mounting cavity is in communication with the outlet cavity and the first valve core mounting cavity.

As a further improved technical solution of the present application, the valve component is provided with a projection projecting from an inner wall of the valve component towards the second valve core mounting cavity, the communicating cavity runs through the projection, and in a case that the coil of the solenoid valve is de-energized, a tail end of the valve core of the solenoid valve abuts against the projection to shut off the communicating cavity from the second valve core mounting cavity.

As a further improved technical solution of the present application, the solenoid valve is a direct operated type solenoid valve, and includes a return spring; the return spring cooperates with the valve core of the solenoid valve; in a case that the coil of the solenoid valve is energized, an electromagnetic force generated by the coil of the solenoid valve drives the valve core of the solenoid valve to overcome an elastic force of the return spring to communicate the second refrigerant flow passage with the first refrigerant flow passage; and in a case that the coil of the solenoid valve is de-energized, the electromagnetic force disappears, the valve core of the solenoid valve is pressed against the projection by the return spring, and the valve core of the solenoid valve shuts off the second refrigerant flow passage from the first refrigerant flow passage.

As a further improved technical solution of the present application, an axis of the first valve core mounting cavity and an axis of the second valve core mounting cavity are arranged to be perpendicular to each other, and the communicating cavity communicates the first valve core mounting cavity with the second valve core mounting cavity in a case that the coil of the solenoid valve is energized.

As a further improved technical solution of the present application, a flow area of the refrigerant flow passage at the first valve port is smaller than any one of a flow area of the refrigerant flow passage at the inlet cavity and a flow area of the refrigerant flow passage at the communicating cavity.

As a further improved technical solution of the present application, the first valve body and the second valve body are integrally formed.

As a further improved technical solution of the present application, the electronic expansion valve further includes an outer cover for protecting the valve core of the electronic expansion valve, a liner tube is provided inside the outer cover, and the liner tube is arranged to abut against a top of the outer cover, a stop rod for limiting a movement stroke of the valve core of the electronic expansion valve is fixedly connected to the liner tube, and the stop rod is fixed to the liner tube by welding.

A refrigerant system adapted to a vehicle air conditioning system is further provided according to the present application, which may be used in a vehicle air conditioning system, the refrigerant system includes a compressor, a gas cooler, a flow control valve and an evaporator which are connected by pipelines; wherein the flow control valve includes an electronic expansion valve for regulating a flow rate and a solenoid valve, the flow control valve further includes an inlet corresponding to the solenoid valve and an outlet corresponding to the electronic expansion valve, an outlet of the gas cooler is in communication with the inlet of the flow control valve, the outlet of the flow control valve is in communication with an inlet of the evaporator, an outlet of the evaporator is in communication with an inlet of the compressor, and an outlet of the compressor is in communication with an inlet of the gas cooler, and the flow control valve is the above-described flow control valve.

As a further improved technical solution of the present application, in case that the coil of the solenoid valve is energized, the solenoid valve moves to an open position to open the refrigerant flow passage of the flow control valve, and the electronic expansion valve is controlled by a controller to be energized to drive the electronic expansion valve to operate, to enable the vehicle air conditioning system to operate normally.

A method for controlling the flow control valve is further provided according to the present application, the flow control valve is applicable to a vehicle air conditioning system, and the method includes controlling the flow control valve to operate in accordance with a preset control program, wherein the preset control program includes: de-energizing the coil of the solenoid valve in a case that the flow control valve is de-energized during operation due to a vehicle failure, and shutting off, by the valve core of the solenoid valve, the first refrigerant flow passage from the second refrigerant flow passage.

As a further improved technical solution of the present application, the preset control program further includes the following control programs:
S1, a control process for shutting down the flow control valve;
S2, a control process for starting the flow control valve;
wherein S1 includes the following subprograms:
S11, turning off an engine of a vehicle in a case that a key of the vehicle is removed or is in an OFF position;
S12, continuing to supply power to the solenoid valve and the electronic expansion valve by a storage battery arranged in the vehicle, the solenoid valve being in an open state, and meanwhile adjusting an opening degree of the electronic expansion valve to the maximum; and
S13, de-energizing the coil of the solenoid valve and the coil of the electronic expansion valve, in a case that it is detected that a high pressure and a low pressure of the refrigerant at two ends of the solenoid valve have reached a balance, or have reached a pressure difference between the high pressure and the low pressure which can be overcame by the solenoid valve; and
wherein S2 includes the following subprograms:
S21, powering on the key of the vehicle, and starting the engine;
S22, energizing a controller for controlling the operation of the flow control valve, and controlling, by the controller, the solenoid valve to be energized to move the valve core of the solenoid valve, to communicate the first refrigerant flow passage with the second refrigerant flow passage; and
S23, controlling, by the controller, the electronic expansion valve to be energized to drive the electronic expansion valve to operate, to enable the vehicle air conditioning system to operate normally.

As a further improved technical solution of the present application, the control programs of the flow control valve are stored in a controller of the flow control valve or a controller of the vehicle; in a case that the control programs are stored in the controller of the vehicle, the controller of the flow control valve is in communication with the controller of the vehicle by Pulse-Width Modulation (PWM) signal or Local Interconnect Network (LIN) signal.

Compared with the conventional technology, in the present application, the electronic expansion valve and the solenoid valve are arranged in series in the flow control valve, thus, when the solenoid valve is de-energized, the flow path of the refrigerant from the first refrigerant flow passage to the second refrigerant flow passage is shut off by the valve core of the solenoid valve, thereby preventing the refrigerant, particularly carbon dioxide refrigerant, from leaking through the second refrigerant flow passage.

### BRIEF DESCRIPTION OF THE DRAWINGS

Figure 1 is a schematic view showing the connection relationship of a refrigerating system according to the present application;
Figure 2 is a schematic view showing the structure of a flow control valve according to the present application; and
Figure 3 is an exploded schematic view showing the structure of a valve component of the flow control valve according to the present application.

### DETAILED DESCRIPTION

The present application is further described hereinafter in conjunction with drawings and embodiments.

A flow control valve is provided according to the present application. The flow control valve applied to a vehicle air conditioning/refrigerating system using carbon dioxide as a refrigerant, the refrigerating system and a method for controlling the flow control valve are described in detail in this embodiment.

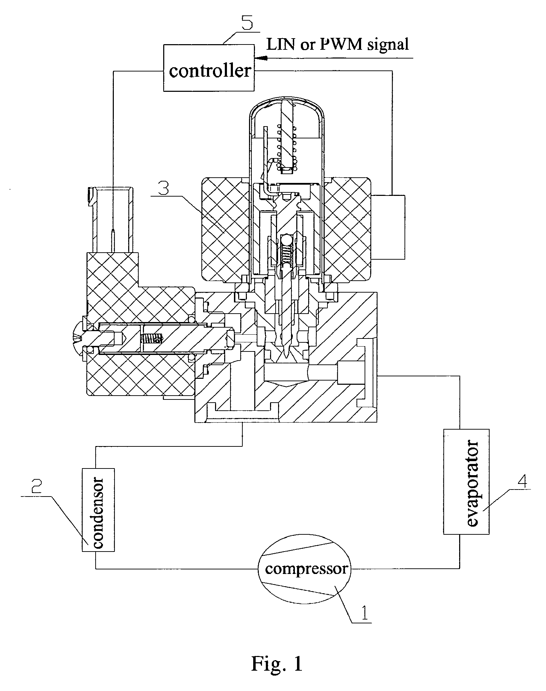

Figure 1 is a schematic view showing the connection relationship of the refrigerating system according to the present application. The refrigerating system includes a compressor 1, a gas cooler 2, a flow control valve 3 and an evaporator 4 which are connected by pipelines. In this embodiment, the refrigerant passes through the compressor 1, the gas cooler 2, the flow control valve 3 and the evaporator 4, and then returns to the compressor 1, thereby forming a working cycle.

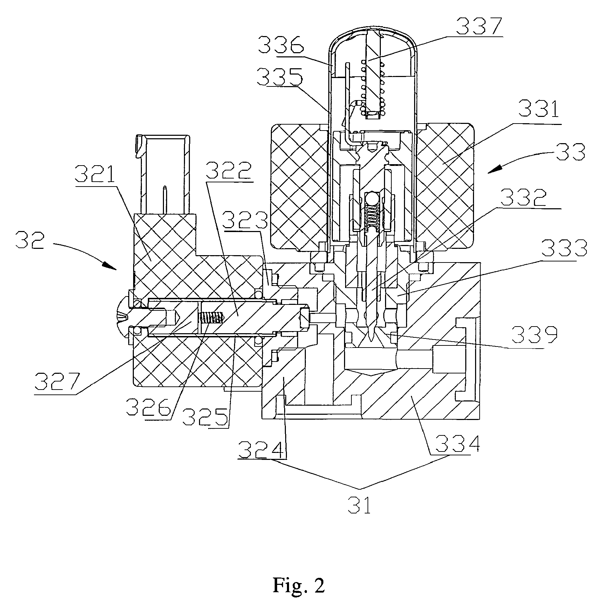

Figure 2 is a schematic view showing the structure of the flow control valve according to this embodiment. The flow control valve 3 includes a normally closed solenoid valve 32 and an electronic expansion valve 33, the solenoid valve 32 and the electronic expansion valve 33 are arranged in series in a refrigerant flow direction. The solenoid valve 32 corresponds to an inlet of the flow control valve 3, and the electronic expansion valve 33 corresponds to an outlet of the flow control valve 3. The solenoid valve 32 is capable of rapidly shutting off the refrigerant flow passage, and the electronic expansion valve 33 is configured to regulate the refrigerant flow in the refrigerant flow passage.

The electronic expansion valve 33 includes a coil 331 of the electronic expansion valve, a valve core 332 of the electronic expansion valve, a valve seat 333 of the electronic expansion valve, and a first valve body 334. The first valve body 334 is provided with a first refrigerant flow passage. The valve seat 333 of the electronic expansion valve is connected to the first valve body 334 by screw threads, and the valve core 332 of the electronic expansion valve fits with a first valve port 339 to realize the flow control.

The electronic expansion valve 33 includes an outer cover 335 for protecting the valve core 332 of the electronic expansion valve, and the outer cover 335 is fixed by the valve seat 333 of the electronic expansion valve. A liner tube 336 is provided inside the outer cover 335, and is arranged to abut against a top of the outer cover 335, and the liner tube 336 and the outer cover 335 are fixed by a bump and a pit (not shown) correspondingly arranged on the two members. A stop rod 337 for limiting a movement stroke of the valve core 332 of the electronic expansion valve is fixedly connected to the liner tube 336, and the stop rod 337 is fixed to the liner tube 336 by welding. The stop rod 337 arranged in the above manner is not required to be welded to the outer cover 335, and thus increasing the strength of the outer cover 335. Such structure increases the safety of the refrigerating system with the flow control valve 3, especially for a refrigerating system using carbon dioxide as the refrigerant since the pressure in the refrigerating system is required to be relatively high.

In this embodiment, the solenoid valve 32 may be a direct operated type solenoid valve, the solenoid valve 32 includes a coil 321 of the solenoid valve, a valve core 322 of the solenoid valve, a valve seat 323 of the solenoid valve, a second valve body 324 and a return spring 326. The second valve body 334 is provided with a second refrigerant flow passage, and a guiding element 325 is provided outside the valve core 322 of the solenoid valve. The first refrigerant flow passage and the second refrigerant flow passage are collectively referred to as the refrigerant flow passage.

The valve seat 323 of the solenoid valve is connected to the second valve body 324 by screw threads. The valve seat 323 of the solenoid valve is provided with a through hole at a central portion, and the guiding element 325 passes through the through hole in the valve seat 323 of the solenoid valve and is fixed to the valve seat 323 of the solenoid valve. One end inside the guiding element 325 is provided with a fixing portion 327, and the fixing portion 327 is in contact with one end of the return spring 326, and another end of the return spring 326 is in contact with the valve core 322 of the solenoid valve. The valve core 322 of the solenoid valve is arranged inside the guiding element 325 and passes through the through hole arranged in the valve seat 323 of the solenoid valve, and when the return spring 326 is in a compressed state, one end of the valve core 322 of the solenoid valve also protrudes out of a surface, facing the second valve body 324, of the valve seat 323 of the solenoid valve.

When the coil 321 of the solenoid valve is energized, an electromagnetic force generated by the coil 321 of the solenoid valve drives the valve core 322 of the solenoid valve to overcome an acting force of the return spring 326 to compress the return spring 326 to retract, thus the refrigerant can flow through the second valve body 324 to be in communication with the first valve body 334. When the coil 321 of the solenoid valve is de-energized, the electromagnetic force disappears, and the return spring 326 returns to the original position to press the valve core 322 of the solenoid valve against the second valve body 324, thereby shutting off the refrigerant flow passage. In a case that the solenoid valve is the direct operated type solenoid valve, when the coil 321 of the solenoid valve is de-energized, the valve core 322 of the solenoid valve can respond rapidly to shut off the refrigerant circuit, thus the safety factor is high. Of course, the solenoid valve 32 may also be a pilot-operated solenoid valve so as to overcome a higher pressure difference when being re-started.

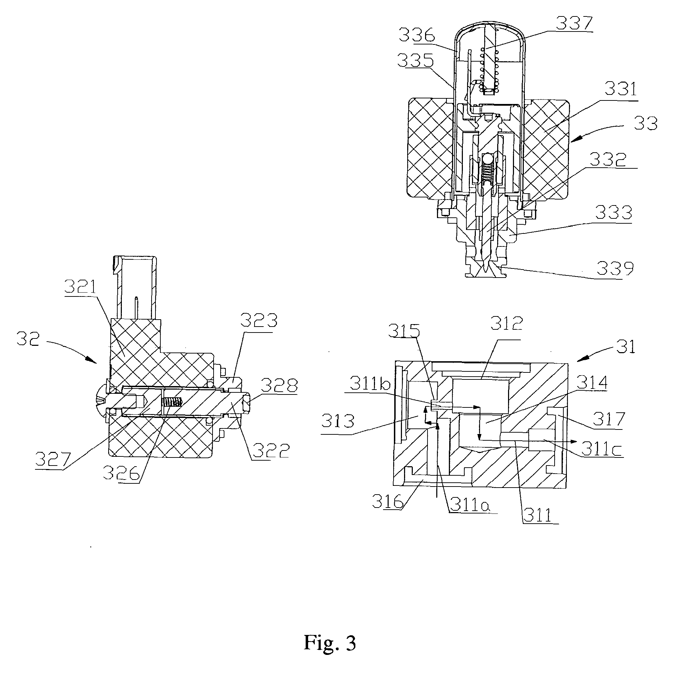

An exploded view of the flow control valve is shown in Figure 3, the flow control valve 3 has a valve component 31 which is integrally formed, and the valve component 31 includes the first valve body 334 and the second valve body 324 which are described above. A polyline with arrows in the figure is used to indicate the flow path of the refrigerant in the valve component 31. By integrally forming the first valve body 334 and the second valve body 324, the valve body has a small volume and a small weight, and is easy to manufacture and install.

The valve component 31 is provided with a refrigerant flow passage 311, and the refrigerant flow passage 311 includes an inlet cavity 311a, a communicating cavity 311b and an outlet cavity 311c. The valve component 31 further includes a first valve core mounting cavity 312 for the electronic expansion valve, a second valve core mounting cavity 313 for the solenoid valve, and a first valve port mounting cavity 314. The inlet cavity 311a is in communication with the communicating cavity 311b via the second valve core mounting cavity 313, and the communicating cavity 311b is in communication with the outlet cavity 311c via the first valve core mounting cavity 312 and the first valve port mounting cavity 314.

The first valve core mounting cavity 312 is in communication with the communicating cavity 311b and the first valve port mounting cavity 314. The second valve core mounting cavity 313 is in communication with the inlet cavity 311a and the communicating cavity 311b. The first valve port mounting cavity 314 is in communication with the outlet cavity 311c and the first valve core mounting cavity 312.

When the valve core 332 of the electronic expansion valve fully opens the first valve port 339, a flow area of the refrigerant flow passage at the first valve port 339 is smaller than any one of a flow area at the inlet cavity 311a and a flow area at the communicating cavity 311b, thus the throttling effect to the refrigerant in the refrigerant flow passage in the valve component 31 is produced only at the first valve port 339, which facilitates the flow control.

In this embodiment, axes of the first valve core mounting cavity 312 and the second valve core mounting cavity 313 are arranged to be perpendicular to each other. The communicating cavity 311b communicates the first valve core mounting cavity 312 with the second valve core mounting cavity 313. Such arrangement enables the flow control valve to have a structure as compact as possible, and reduces a volume of the flow control valve 3, thus the flow control valve 3 can be assembled into the system easily. Of course, the first valve core mounting cavity 312 and the second valve core mounting cavity 313 may also be arranged parallel to each other, which can also achieve the effect of the present application.

A projection 315 is provided on an inner wall, facing the second valve core mounting cavity 313, of the valve component 31, and the communicating cavity 311b runs through the projection 315 and the inner wall of the valve component 31. In a case that the coil 321 of the solenoid valve is de-energized, a tail end of the valve core 322 of the solenoid valve abuts against the projection 315 to separate the communicating cavity 311b from the second valve core mounting cavity 313, thus the refrigerant cannot enter the communicating cavity 311b. As shown in Figure 3, the tail end of the valve core 322 of the solenoid valve is provided with a buffer element 328, and the buffer element 328 can not only reduce the noise generated when the valve core 322 of the solenoid valve directly collides with the projection 315, but also ensure a better sealing performance between the valve core 322 of the solenoid valve and the projection 315.

The valve component 31 further includes a first pipeline connecting portion 316 arranged at an inlet of the inlet cavity 311a and a second pipeline connecting portion 317 arranged at a tail end of the outlet cavity 311c. The first pipeline connecting portion 316 and the second pipeline connecting portion 317 are each a concave cavity arranged in the valve component 31. Such arrangement may allow the connection between the connecting pipelines and the valve component 31 to be more reliable.

In this embodiment, the working process of the flow control valve 3 is described as follows. The coil 321 of the solenoid valve is energized, the valve core 322 of the solenoid valve is disengaged from the projection 315, thus the refrigerant enters into the inlet cavity 311a of the flow control valve 3, and then enters into the second valve core mounting cavity 313, and then enters into the first valve core mounting cavity 312 through the communicating cavity 311b, and then enters into the outlet cavity 311c through the first valve port 339, and finally flows out of the flow control valve 3. In the working process of the flow control valve 3, the flow rate of the refrigerant may be regulated by adjusting a gap between the second valve core mounting cavity 313 and the first valve port 339. When the coil 321 of the solenoid valve is de-energized, the valve core 322 of the solenoid valve abuts against the surface of the projection 315 to shut off the refrigerant passage between the second valve core mounting cavity 313 and the communicating cavity 311b, thereby shutting off the flow of the refrigerant.

The refrigerating system as shown in Figure 1 can be applied to a vehicle air conditioning system. The refrigerating system includes the compressor 1, the gas cooler 2, the flow control valve 3 and the evaporator 4 which are connected by pipelines. An outlet of the gas cooler 2 is in communication with the inlet cavity 311a of the valve component 31, and the connecting pipeline between the gas cooler 2 and the valve component 31 is connected to the first pipeline connecting portion 316 of the valve component 31. An inlet of the evaporator 4 is in communication with the outlet cavity 311c of the valve component 31, and the connecting pipeline between the evaporator 4 and the valve component 31 is connected to the second pipeline connecting portion 317 of the valve component 31. An outlet of the evaporator 4 is in communication with an inlet of the compressor 1, and an outlet of the compressor 1 is in communication with an inlet of the gas cooler 2. The first pipeline connecting portion 316 is arranged at the inlet of the flow control valve 3, and the second pipeline connecting portion 317 is arranged at the outlet of the flow control valve 3.

In the refrigerating system, the flow control valve 3 is operated in accordance with a preset control program. When the coil 321 of the solenoid valve is controlled to be energized, the valve core 322 of the solenoid valve opens the refrigerant flow passage between the gas cooler 2 and the first valve port 339. When the coil 321 of the solenoid valve is de-energized, the valve core 322 of the solenoid valve shuts off the refrigerant flow passage between the gas cooler 2 and the first valve port 339, thus the refrigerant cannot enter the evaporator 4. In this embodiment, the valve core 332 of the electronic expansion valve cooperates with the first valve port 339 to regulate the flow rate of the refrigerant passing through the evaporator 4, and the flow rate of the refrigerant flowing through the evaporator 4 is increased as an opening degree between the valve core 332 of the electronic expansion valve and the first valve port 339 increases. The refrigerant flow passage is divided into a high pressure side and a low pressure side by the first valve port 339, the valve core 322 of the solenoid valve is arranged at the high pressure side, and the pressure difference between the high pressure side and the low pressure side allows the valve core 322 of the solenoid valve to shut off the refrigerant flow passage more rapidly, thereby preventing the refrigerant at the high pressure side from leaking to the low pressure side to enter into the compartment to cause passengers to be suffocated in the compartment.

A method for controlling the flow control valve 3 is further provided according to the present application. A preset control program is provided to control the flow control valve 3, to optimize the structure of the flow control valve 3. The control method is described in situations that the flow control valve 3 is suddenly de-energized due to a vehicle failure, and the flow control valve 3 is normally de-energized, and the flow control valve 3 is normally started.

When a vehicle failure occurs and causes the flow control valve 3 to be suddenly de-energized, the solenoid valve 32 is de-energized, and the valve core 322 of the solenoid valve is driven by the return spring 326 to shut off the refrigerant flow passage, and the refrigerant at the high pressure side and the refrigerant at the low pressure side are separated from each other at an area where the valve core 322 of the solenoid valve is located, thereby achieving the function of shutting off the flow of the refrigerant. In this case, if the solenoid valve 32 is a direct operated type solenoid valve having a small coil driving force, the solenoid valve 32 cannot start itself again until the system pressure is balanced to a pressure difference between the high pressure side and the low pressure side which can be overcame by the solenoid valve.

In normal operation, when a vehicle engine is turned off, the de-energizing programs of the solenoid valve 32 and the electronic expansion valves 33 are controlled by a controller. In detail, when the engine is turned off by a key, a vehicle battery continues to supply power to the coil 331 of the electronic expansion valve and the coil 321 of the solenoid valve. In this process, the valve core 332 of the electronic expansion valve is operated to a maximum opening degree from the normal operating condition, to release the high pressure. When the pressures at the high pressure side and the low pressure side reach a balance, or reaches a pressure difference between the high pressure side and the low pressure side which can be overcame by the solenoid valve 32, the solenoid valve 32 and the electronic expansion valve 33 are de-energized, and at this time, the solenoid valve 32 is in a closed state, and the electronic expansion valve 33 is in a state required by an initialization program.

When the flow control valve 3 is normally started, the coil 321 of the solenoid valve 32 is first energized, and then the electronic expansion valve 33 is energized. In this way, the solenoid valve 32 is started in a state that the pressure difference is zero, and only needs to overcome a very small force of the return spring, thus the solenoid valve can be designed to have a very small coil 321, which greatly reduces the energy consumption of the solenoid valve 32. Also, the solenoid valve 32 can be designed to have a large inside diameter, which reduces the pressure difference between two ends of the solenoid valve, and facilitates increasing the system energy efficiency, and also reduces the design and manufacturing difficulties. In the flow control valve, the high pressure and the low pressure of the refrigerant at two ends of the solenoid valve are collected by a pressure sensor or other devices, and then are calculated by a controller to obtain data for determination, such as the pressure difference. The determination condition is: determining whether the high pressure and the low pressure have reached a balance or determining whether the pressure difference between the high pressure and the low pressure have reached a preset value preset by the controller, and until the determination result is yes, the solenoid valve is controlled to be energized or de-energized.

In the cases that the flow control valve 3 is normally de-energized and the flow control valve 3 is normally started, the preset control program further includes the following control programs:
S1, a control process for shutting down the flow control valve;
S2, a control process for starting the flow control valve;

The control program S 1 includes the following subprograms:
S11, turning off a vehicle engine when a vehicle key is removed or is in an OFF position;
S12, continuing to supply power to the solenoid valve and the electronic expansion valve by a storage battery arranged in the vehicle, the solenoid valve being in an open state, and meanwhile adjusting the opening degree of the electronic expansion valve to the maximum; and
S13, de-energizing the coil of the solenoid valve and the coil of the electronic expansion valve, when the high pressure and the low pressure of the refrigerant at two ends of the solenoid valve which are detected by the pressure sensor have reached a balance, or have reached a pressure difference which can be overcame by the solenoid valve.

The control program S2 includes the following subprograms:
S21, powering on the vehicle key, and starting the engine;
S22, energizing a controller for controlling the operation of the flow control valve, when the high pressure and the low pressure of the refrigerant at two ends of the solenoid valve which are detected by the pressure sensor have reached a balance, or have reached a pressure difference which can be overcame by the solenoid valve, and controlling, by the controller, the solenoid valve to be energized to move the valve core of the solenoid valve, to communicate the first refrigerant flow passage with the second refrigerant flow passage; and
S23, controlling, by the controller, the electronic expansion valve to be energized to drive the electronic expansion valve to operate, to enable the vehicle air conditioning system to operate normally.

When the vehicle is involved in an accident, even if the solenoid valve 32 is not de-energized, the valve can also be closed by the rapid shutdown function of the electronic expansion valve 33, thereby shutting off the refrigerant flow passage.

Of course, the above control programs may be provided in a controller of the flow control valve or a main controller of the vehicle. In a case that the control programs are provided in the controller of the flow control valve, the controller of the vehicle is simply required to send request signals for normally closing and opening the flow control valve to the controller of the flow control valve. In a case that the control programs are provided in the main controller of the vehicle, the main controller of the vehicle is required to send the above specific programs of the operation steps. The sending of such request signal may be realized by a Pulse-Width Modulation (PWM) signal or a Local Interconnect Network (LIN) signal. When the vehicle is in an accident state, the operation of the flow control valve is independent of the position of the control program, and the automatic shutdown function may be realized as long as the normally closed solenoid valve 32 is de-energized.

## Claims

1. A flow control valve, comprising an electronic expansion valve (33), wherein the electronic expansion valve (33) comprises a coil (331) of the electronic expansion valve (33), a valve core (333) of the electronic expansion valve (33), a first valve body (334), a first refrigerant flow passage, and a first valve port (339) located in the first refrigerant flow passage and corresponding to the valve core (333) of the electronic expansion valve (33), and the valve core (333) of the electronic expansion valve (33) moves with respect to the first valve port (339) to control an opening degree of the first valve port (339), wherein the flow control valve further comprises a normally closed solenoid valve (32), the solenoid valve (32) comprises a coil (321) of the solenoid valve (32), a valve core (322) of the solenoid valve (32), a second valve body (324) and a second refrigerant flow passage; the valve core (322) of the solenoid valve (32) communicates the second refrigerant flow passage with the first refrigerant flow passage in a case that the coil (321) of the solenoid valve (32) is energized; and the valve core (322) of the solenoid valve (32) shuts off the second refrigerant flow passage from the first refrigerant flow passage in a case that the coil (321) of the solenoid valve (32) is de-energized; and
the electronic expansion valve (33) is integrated with the solenoid valve (32), the flow control valve comprises a valve component (31), the valve component (31) comprises the first valve body (334) and the second valve body (324), the valve component (31) is provided with a refrigerant flow passage (311), a first valve core mounting cavity (312) for the electronic expansion valve (33), a second valve core mounting cavity (313) for the solenoid valve (32) and a first valve port mounting cavity (314); the refrigerant flow passage (311) comprises the first refrigerant flow passage and the second refrigerant flow passage, the refrigerant flow passage (311) comprises an inlet cavity (311a), a communicating cavity (311b), an outlet cavity (311c); the first valve core mounting cavity (312) is in communication with the communicating cavity (311b) and the first valve port mounting cavity (314); the valve core (322) of the solenoid valve (32) is movable to communicate the second valve core mounting cavity (313) with the inlet cavity (311a) and the communicating cavity (311b) or shut off the second valve core mounting cavity (313) from the inlet cavity (311a) and the communicating cavity (311b); and the first valve port mounting cavity (314) is in communication with the outlet cavity (311c) and the first valve core mounting cavity (312).

2. The flow control valve according to claim 1, wherein the valve component (31) is provided with a projection (315) projecting from an inner wall of the valve component (31) towards the second valve core mounting cavity (313), the communicating cavity (311b) runs through the projection (315), and in a case that the coil (321) of the solenoid valve (32) is de-energized, a tail end of the valve core (322) of the solenoid valve (32) abuts against the projection (315) to shut off the communicating cavity (311b) from the second valve core mounting cavity (313).

3. The flow control valve according to claim 2, wherein the solenoid valve (32) is a direct operated type solenoid valve, and comprises a return spring (326); the return spring (326) cooperates with the valve core (322) of the solenoid valve (32); in a case that the coil (321) of the solenoid valve (32) is energized, an electromagnetic force generated by the coil (321) of the solenoid valve (32) drives the valve core (322) of the solenoid valve (32) to overcome an elastic force of the return spring (326) to communicate the second refrigerant flow passage with the first refrigerant flow passage; and in a case that the coil (321) of the solenoid valve (32) is de-energized, the electromagnetic force disappears, the valve core (322) of the solenoid valve (32) is pressed against the projection (315) by the return spring (326), and the valve core (322) of the solenoid valve (32) shuts off the second refrigerant flow passage from the first refrigerant flow passage.

4. The flow control valve according to claim 1, wherein an axis of the first valve core mounting cavity (312) and an axis of the second valve core mounting cavity (313) are arranged to be perpendicular to each other, and the communicating cavity (311b) communicates the first valve core mounting cavity (312) with the second valve core mounting cavity (313) in a case that the coil (321) of the solenoid valve (32) is energized.

5. The flow control valve according to claim 1, wherein a flow area of the refrigerant flow passage (311) at the first valve port (339) is smaller than any one of a flow area of the refrigerant flow passage (311) at the inlet cavity (311a) and a flow area of the refrigerant flow passage (311) at the communicating cavity (311b).

6. The flow control valve according to any one of claims 1 to 5, wherein the first valve body (334) and the second valve body (324) are integrally formed.

7. The flow control valve according to claim 6, wherein the electronic expansion valve (33) further comprises an outer cover (335) for protecting the valve core of the electronic expansion valve (33), a liner tube (336) is provided inside the outer cover (335), and the liner tube (336) is arranged to abut against a top of the outer cover (335), a stop rod (337) for limiting a movement stroke of the valve core (333) of the electronic expansion valve (33) is fixedly connected to the liner tube (336), and the stop rod (337) is fixed to the liner tube (336) by welding.

8. A refrigerant system adapted to a vehicle air conditioning system, the refrigerant system comprising a compressor (1), a condenser (2), a flow control valve (3) and an evaporator (4) which are connected by pipelines; wherein the flow control valve (3) comprises an electronic expansion valve (33) for regulating a flow rate and a solenoid valve (32), the flow control valve (3) further comprises an inlet corresponding to the solenoid valve (32) and an outlet corresponding to the electronic expansion valve (33), an outlet of the condenser (2) is in communication with the inlet of the flow control valve (3), the outlet of the flow control valve (3) is in communication with an inlet of the evaporator (4), an outlet of the evaporator (4) is in communication with an inlet of the compressor (1), and an outlet of the compressor (1) is in communication with an inlet of the condenser (2), and the flow control valve (3) is the flow control valve according to any one of claims 1 to 7.

9. The refrigerant system adapted to the vehicle air conditioning system according to claim 8, wherein in case that the coil (321) of the solenoid valve (32) is energized, the solenoid valve (32) moves to an open position to open the refrigerant flow passage of the flow control valve (3), and the electronic expansion valve (33) is controlled by a controller (5) to be energized to drive the electronic expansion valve (33) to operate, to enable the vehicle air conditioning system to operate normally.

10. A method for controlling the flow control valve according to any one of claims 1 to 7, wherein the valve core (333) of the electronic expansion valve (33) moves with respect to the first valve port (339) to control an opening degree of the first valve port (339), and the valve core (322) of the solenoid valve (32) communicates the second refrigerant flow passage with the first refrigerant flow passage in a case that the coil (321) of the solenoid valve (32) is energized; and the valve core (322) of the solenoid valve (32) shuts off the second refrigerant flow passage from the first refrigerant flow passage in a case that the coil (321) of the solenoid valve (32) is de-energized, and the flow control valve is applicable to a vehicle air conditioning system; and
wherein the method comprises: controlling the flow control valve to operate in accordance with a preset control program, wherein the preset control program comprises: de-energizing the coil (321) of the solenoid valve (32) in a case that the flow control valve is de-energized during operation, and shutting off, by the valve core (322) of the solenoid valve (32), the first refrigerant flow passage from the second refrigerant flow passage.

11. The method for controlling the flow control valve according to claim 10, wherein the preset control program further comprises the following control programs:
S1, a control process for shutting down the flow control valve;
S2, a control process for starting the flow control valve;
wherein S1 comprises the following subprograms:
S11, turning off an engine of a vehicle in a case that a key of the vehicle is removed or is in an OFF position;
S12, continuing to supply power to the solenoid valve (32) and the electronic expansion valve (33) by a storage battery arranged in the vehicle, the solenoid valve (32) being in an open state, and meanwhile adjusting an opening degree of the electronic expansion valve (33) to the maximum; and
S13, de-energizing the coil (321) of the solenoid valve (32) and the coil (331) of the electronic expansion valve (33), in a case that it is detected that a high pressure and a low pressure of the refrigerant at two ends of the solenoid valve (32) have reached a balance, or have reached a pressure difference between the high pressure side and the low pressure side which can be overcame by the solenoid valve (32), and shutting off, by the valve core (322) of the solenoid valve (32), the first refrigerant flow passage from the second refrigerant flow passage; and
wherein S2 comprises the following subprograms:
S21, powering on the key of the vehicle, and starting the engine;
S22, energizing a controller for controlling the operation of the flow control valve, and controlling, by the controller, the solenoid valve (32) to be energized to move the valve core (322) of the solenoid valve (32), to communicate the first refrigerant flow passage with the second refrigerant flow passage; and
S23, controlling, by the controller, the electronic expansion valve (33) to be energized to drive the electronic expansion valve (33) to operate, to enable the vehicle air conditioning system to operate normally.

12. The method for controlling the flow control valve according to claim 10 or 11, wherein the control programs of the flow control valve are stored in a controller of the flow control valve or a controller of the vehicle; in a case that the control programs are stored in the controller of the vehicle, the controller of the flow control valve is in communication with the controller of the vehicle by Pulse-Width Modulation (PWM) signal or Local Interconnect Network (LIN) signal.

13. The method for controlling the flow control valve according to claim 10 or 11, wherein the preset control program further comprises the following control programs:
in a case that the flow control valve is suddenly de-energized due to a vehicle failure, de-energizing the coil (321) of the solenoid valve (32) to shut off the first refrigerant flow passage from the second refrigerant flow passage; and
in a case that the flow control valve is suddenly de-energized due to the vehicle failure and the coil (321) of the solenoid valve (32) is not de-energized, closing the valve by a rapid shutdown function of the electronic expansion valve (33), to shut off the refrigerant flow passage.

## Patentansprüche

1. Durchflusssteuerventil, ein elektronisches Expansionsventil (33) umfassend, wobei das elektronische Expansionsventil (33) eine Spule (331) des elektronischen Expansionsventils (33), einen Ventileinsatz (333) des elektronischen Expansionsventils (33), einen ersten Ventilkörper (334), einen ersten Kühlmitteldurchlass und einen ersten Ventilanschluss (339) umfasst, der im ersten Kühlmitteldurchlass angeordnet ist und dem Ventileinsatz (333) des elektronischen Expansionsventils (33) entspricht, wobei sich der Ventileinsatz (333) des elektronischen Expansionsventils (33) im Verhältnis zum ersten Ventilanschluss (339) bewegt, um einen Öffnungsgrad des ersten Ventilanschlusses (339) zu steuern, wobei das Durchflusssteuerventil ferner ein normal geschlossenes Magnetventil (32) umfasst, wobei das Magnetventil (32) eine Spule (321) des Magnetventils (32), einen Ventileinsatz (322) des Magnetventils (32), einen zweiten Ventilkörper (324) und einen zweiten Kühlmitteldurchlass umfasst, wobei der Ventileinsatz (322) des Magnetventils (32) den zweiten Kühlmitteldurchlass mit dem ersten Kühlmitteldurchlass verbindet, wenn die Spule (321) des Magnetventils (32) erregt ist, und der Ventileinsatz (322) des Magnetventils (32) den zweiten Kühlmitteldurchlass vom ersten Kühlmitteldurchlass trennt, wenn die Spule (321) des Magnetventils (32) abgeschaltet ist, und
wobei das elektronische Expansionsventil (33) in das Magnetventil (32) integriert ist, das Durchflusssteuerventil eine Ventilkomponente (31) umfasst, die Ventilkomponente (31) den ersten Ventilkörper (334) und den zweiten Ventilkörper (324) umfasst, die Ventilkomponente (31) mit einem Kühlmitteldurchlass (311), einem ersten Ventileinsatz-Montagehohlraum (312) für das elektronische Expansionsventil (33), einem zweiten Ventileinsatz-Montagehohlraum (313) für das Magnetventil (32) und einem ersten Ventilanschluss-Montagehohlraum (314) versehen ist, wobei der Kühlmitteldurchlass (311) den ersten Kühlmitteldurchlass und den zweiten Kühlmitteldurchlass umfasst, der Kühlmitteldurchlass (311) einen Einlasshohlraum (311a), einen Verbindungshohlraum (311 b), einen Auslasshohlraum (311 c) umfasst, der erste Ventileinsatz-Montagehohlraum (312) in Verbindung mit dem Verbindungshohlraum (311 b) und dem ersten Ventileinsatz-Montagehohlraum (314) steht, der Ventileinsatz (322) des Magnetventils (32) beweglich ist, um den zweiten Ventileinsatz-Montagehohlraum (313) mit dem Einlasshohlraum (311 a) und dem Verbindungshohlraum (311 b) zu verbinden oder den zweiten Ventileinsatz-Montagehohlraum (313) vom Einlasshohlraum (311 a) und dem Verbindungshohlraum (311 b) zu trennen, und der erste Ventilanschluss-Montagehohlraum (314) in Verbindung mit dem Auslasshohlraum (311 c) und dem ersten Ventileinsatz-Montagehohlraum (312) steht.

2. Durchflusssteuerventil nach Anspruch 1, wobei die Ventilkomponente (31) mit einem Vorsprung (315) ausgestattet ist, der von einer Innenwand der Ventilkomponente (31) hin zum zweiten Ventileinsatz-Montagehohlraum (313) hervorsteht, wobei der Verbindungshohlraum (311 b) durch den Vorsprung (315) verläuft und, wenn die Spule (321) des Magnetventils (32) abgeschaltet ist, ein hinteres Ende des Ventileinsatzes (322) des Magnetventils (32) am Vorsprung (315) anliegt, um den Verbindungshohlraum (311 b) vom zweiten Ventileinsatz-Montagehohlraum (313) zu trennen.

3. Durchflusssteuerventil nach Anspruch 2, wobei das Magnetventil (32) ein Magnetventil der direkt betätigten Art ist und eine Rückstellfeder (326) umfasst, wobei die Rückstellfeder (326) mit dem Ventileinsatz (322) des Magnetventils (32) zusammenarbeitet, wobei, wenn die Spule (321) des Magnetventils (32) erregt ist, eine elektromagnetische Kraft, die von der Spule (321) des Magnetventils (32) erzeugt wird, den Ventileinsatz (322) des Magnetventils (32) dazu antreibt, eine Federkraft der Rückstellfeder (326) zu überwinden, um den zweiten Kühlmitteldurchlass mit dem ersten Kühlmitteldurchlass zu verbinden, und wenn die Spule (321) des Magnetventils (32) abgeschaltet ist, die elektromagnetische Kraft erlischt, der Ventileinsatz (322) des Magnetventils (32) durch die Rückstellfeder (326) gegen den Vorsprung (315) gepresst wird und der Ventileinsatz (322) des Magnetventils (32) den zweiten Kühlmitteldurchlass vom ersten Kühlmitteldurchlass trennt.

4. Durchflusssteuerventil nach Anspruch 1, wobei eine Achse des ersten Ventileinsatz-Montagehohlraums (312) und eine Achse des zweiten Ventileinsatz-Montagehohlraums (313) so angeordnet sind, dass sie senkrecht zueinander liegen, und der Verbindungshohlraum (311 b) den ersten Ventileinsatz-Montagehohlraum (312) mit dem zweiten Ventileinsatz-Montagehohlraum (313) verbindet, wenn die Spule (321) des Magnetventils (32) erregt ist.

5. Durchflusssteuerventil nach Anspruch 1, wobei ein Durchflussquerschnitt des Kühlmitteldurchlasses (311) am ersten Ventilanschluss (339) kleiner ist als ein Durchflussquerschnitt des Kühlmitteldurchlasses (311) am Einlasshohlraum (311a) oder ein Durchflussquerschnitt des Kühlmitteldurchlasses (311) am Verbindungshohlraum (311 b).

6. Durchflusssteuerventil nach einem der Ansprüche 1 bis 5, wobei der erste Ventilkörper (334) und der zweite Ventilkörper (324) einstückig gebildet sind.

7. Durchflusssteuerventil nach Anspruch 6, wobei das elektronische Expansionsventil (33) ferner eine Außenabdeckung (335) umfasst, um den Ventileinsatz des elektronischen Expansionsventils (33) zu schützen, wobei im Inneren der Außenabdeckung (335) ein Auskleidungsrohr (336) bereitgestellt ist und das Auskleidungsrohr (336) so angeordnet ist, dass es an einer Oberseite der Außenabdeckung (335) anliegt, wobei ein Anschlagsstab (337) fest mit dem Auskleidungsrohr (336) verbunden ist, um den Hub des Ventileinsatzes (333) des elektronischen Expansionsventils (33) zu begrenzen, und der Anschlagstab (337) durch Schweißen am Auskleidungsrohr (336) befestigt ist.

8. Kühlmittelsystem, eingerichtet für eine Kraftfahrzeug-Klimaanlage, wobei das Kühlmittelsystem einen Kompressor (1), einen Kondensator (2), ein Durchflusssteuerventil (3) und einen Verdampfer (4) umfasst, die durch Rohrleitungen verbunden sind, wobei das Durchflusssteuerventil (3) ein elektronisches Expansionsventil (33) zum Regeln einer Durchflussmenge und ein Magnetventil (32) umfasst, wobei das Durchflusssteuerventil (3) ferner einen Einlass umfasst, der dem Magnetventil (32) entspricht, und einen Auslass, der dem elektronischen Expansionsventil (33) entspricht, wobei ein Auslass des Kondensators (2) in Verbindung mit dem Einlass des Durchflusssteuerventils (3) steht, der Auslass des Durchflusssteuerventils (3) in Verbindung mit einem Einlass des Verdampfers (4) steht, ein Auslass des Verdampfers (4) in Verbindung mit einem Einlass des Kompressors (1) steht und ein Auslass des Kompressors (1) in Verbindung mit einem Einlass des Kondensators (2) steht und das Durchflusssteuerventil (3) das Durchflusssteuerventil nach einem der Ansprüche 1 bis 7 ist.

9. Kühlmittelsystem, eingerichtet für eine Kraftfahrzeug-Klimaanlage, nach Anspruch 8, wobei sich das Magnetventil (32) in eine geöffnete Position bewegt, um den Kühlmitteldurchlass des Durchflusssteuerventils (3) zu öffnen, wenn die Spule (321) des Magnetventils (32) erregt ist, und das elektronische Expansionsventil (33) von einem Controller (5) gesteuert wird, erregt zu werden, um den Betrieb des elektronischen Expansionsventils (33) auszulösen, um den normalen Betrieb der Kraftfahrzeug-Klimaanlage zu ermöglichen.

10. Verfahren zum Steuern des Durchflusssteuerventils nach einem der Ansprüche 1 bis 7, wobei sich der Ventileinsatz (333) des elektronischen Expansionsventils (33) im Verhältnis zum ersten Ventilanschluss (339) bewegt, um einen Öffnungsgrad des ersten Ventilanschlusses (339) zu steuern, und der Ventileinsatz (322) des Magnetventils (32) den zweiten Kühlmitteldurchlass mit dem ersten Kühlmitteldurchlass verbindet, wenn die Spule (321) des Magnetventils (32) erregt ist, und der Ventileinsatz des Magnetventils (32) den zweiten Kühlmitteldurchlass vom ersten Kühlmitteldurchlass trennt, wenn die Spule (321) des Magnetventils (32) abgeschaltet ist, wobei das Durchflusssteuerventil für eine Kraftfahrzeug-Klimaanlage verwendbar ist, und
wobei das Verfahren folgendes umfasst: Steuern des Durchflusssteuerventils, gemäß einem voreingestellten Steuerprogramm zu arbeiten, wobei das voreingestellte Steuerprogramm Folgendes umfasst: Abschalten der Spule (321) des Magnetventils (32), wenn das Durchflusssteuerventil während des Betriebes abgeschaltet wird, und trennen des ersten Kühlmitteldurchlasses vom zweiten Kühlmitteldurchlass durch den Ventileinsatz (322) des Magnetventils (32).

11. Verfahren zum Steuern des Durchflusssteuerventils nach Anspruch 10, wobei das voreingestellte Steuerprogramm ferner die folgenden Steuerprogramme umfasst:
S1, einen Steuerprozess zum Stilllegen des Durchflusssteuerventils,
S2, einen Steuerprozess zum Starten des Durchflusssteuerventils,
wobei S1 die folgenden Unterprogramme umfasst:
S11, Abschalten eines Motors eines Fahrzeugs, wenn der Schlüssel des Fahrzeugs abgezogen ist oder sich in einer AUS-Position befindet,
S12, Fortsetzen der Energiezufuhr zum Magnetventil (32) und zum elektronischen Expansionsventil (33) durch eine im Fahrzeug angeordnete Speicherbatterie, wobei sich das Magnetventil (32) in einem geöffneten Zustand befindet und inzwischen ein Öffnungsgrad des elektronischen Expansionsventils (33) auf das Maximum justiert wird, und
S13, Abschalten der Spule (321) des Magnetventils (32) und der Spule (331) des elektronischen Expansionsventils (33), wenn erkannt wird, dass ein Hochdruck und ein Niederdruck des Kühlmittels an zwei Enden des Magnetventils (32) eine Ausgewogenheit erreicht haben oder einen Druckunterschied zwischen der Hochdruckseite und der Niedrigdruckseite erreicht haben, der durch das Magnetventil (32) überwunden werden kann, und Trennen des ersten Kühlmitteldurchlasses vom zweiten Kühlmitteldurchlass durch den Ventileinsatz (322) des Magnetventils (32) und
wobei S2 die folgenden Unterprogramme umfasst:
S21, Zündung einschalten mit dem Schlüssel des Fahrzeugs und Anlassen des Motors,
S22, Anschalten eines Controllers zum Steuern des Betriebes des Durchflusssteuerventils und Steuern des Anschaltens des Magnetventils (32) durch den Controller, um den Ventileinsatz (322) des Magnetventils (32) zu bewegen, um den ersten Kühlmitteldurchlass mit dem zweiten Kühlmitteldurchlass zu verbinden, und
S23, Steuern des Einschaltens des elektronischen Expansionsventils (33) durch den Controller, um den Betrieb des elektronischen Expansionsventils (33) auszulösen, um den normalen Betrieb der Kraftfahrzeug-Klimaanlage zu ermöglichen.

12. Verfahren zum Steuern des Durchflusssteuerventils nach Anspruch 10 oder 11, wobei die Steuerprogramme des Durchflusssteuerventils in einem Controller des Durchflusssteuerventils oder einem Controller des Fahrzeugs gespeichert sind, wobei, wenn das Steuerprogramm im Controller des Fahrzeugs gespeichert ist, der Controller des Durchflusssteuerventils durch ein PWM-Signal (Pulsweitenmodulationssignal) oder ein LIN-Signal (Local-Interconnect-Network-Signal) in Verbindung mit dem Controller des Fahrzeugs steht.

13. Verfahren zum Steuern des Durchflusssteuerventils nach Anspruch 10 oder 11, wobei das voreingestellte Steuerprogramm ferner die folgenden Steuerprogramme umfasst:
Abschalten der Spule (321) des Magnetventils (32), wenn das Durchflusssteuerventil infolge einer Fahrzeugfehlfunktion unvermittelt abgeschaltet wird, um den ersten Kühlmitteldurchlass vom zweiten Kühlmitteldurchlass zu trennen, und
Schließen des Ventils durch eine schnelle Stilllegungsfunktion des elektronischen Expansionsventils (33), wenn das Durchflusssteuerventil infolge einer Fahrzeugfehlfunktion unvermittelt abgeschaltet wird und die Spule (321) des Magnetventils (32) nicht abgeschaltet wird, um den Kühlmitteldurchlass zu trennen.

## Revendications

1. Valve de régulation de débit, comprenant une valve de dilatation électronique (33), dans laquelle la valve de dilatation électronique (33) comprend une bobine (331) de la valve de dilatation électronique (33), un obus de valve (333) de la valve de dilatation électronique (33), un premier corps de valve (334), un premier passage d'écoulement de réfrigérant, et un premier orifice de valve (339) positionné dans le premier passage d'écoulement de réfrigérant et correspondant à l'obus de valve (333) de la valve de dilatation électronique (33) et l'obus de valve (333) de la valve de dilatation électronique (33) se déplace par rapport au premier orifice de valve (339) pour réguler un degré d'ouverture du premier orifice de valve (339), dans laquelle la valve de régulation de débit comprend en outre une électrovalve normalement fermée (32), l'électrovalve (32) comprend une bobine (321) de l'électrovalve (32), un obus de valve (322) de l'électrovalve (32), un second corps de valve (324) et un second passage d'écoulement de réfrigérant ; l'obus de valve (322) de l'électrovalve (32) fait communiquer le second passage d'écoulement de réfrigérant avec le premier passage d'écoulement de réfrigérant dans un cas dans lequel la bobine (321) de l'électrovalve (32) est alimentée ; et l'obus de valve (322) de l'électrovalve (32) isole le second passage d'écoulement de réfrigérant du premier passage d'écoulement de réfrigérant dans un cas dans lequel la bobine (321) de l'électrovalve (32) n'est pas alimentée ; et
la valve de dilatation électronique (33) est intégrée avec l'électrovalve (32), la valve de régulation de débit comprend un composant de valve (31), le composant de valve (31) comprend le premier corps de valve (334) et le second corps de valve (324), le composant de valve (31) est prévu avec un passage d'écoulement de réfrigérant (311), une première cavité de montage d'obus de valve (312) pour la valve de dilatation électronique (33), une seconde cavité de montage d'obus de valve (313) pour l'électrovalve (32) et une première cavité de montage d'orifice de valve (314) ; le passage d'écoulement de réfrigérant (311) comprend le premier passage d'écoulement de réfrigérant et le second passage d'écoulement de réfrigérant, le passage d'écoulement de réfrigérant (311) comprend une cavité d'entrée (311 a), une cavité de communication (311 b), une cavité de sortie (311 c) ; la première cavité de montage d'obus de valve (312) est en communication avec la cavité de communication (311b) et la première cavité de montage d'orifice de valve (314) ; l'obus de valve (322) de l'électrovalve (32) est mobile pour faire communiquer la seconde cavité de montage d'obus de valve (313) avec la cavité d'entrée (311 a) et la cavité de communication (311 b) ou isoler la seconde cavité de montage d'obus de valve (313) de la cavité d'entrée (311 a) et de la cavité de communication (311 b) ; et la première cavité de montage d'orifice de valve (314) est en communication avec la cavité de sortie (311c) et la première cavité de montage d'obus de valve (312).

2. Valve de régulation de débit selon la revendication 1, dans laquelle le composant de valve (31) est prévu avec une saillie (315) faisant saillie d'une paroi interne du composant de valve (31) vers la seconde cavité de montage d'obus de valve (313), la cavité de communication (311 b) s'étend à travers la saillie (315), et dans un cas dans lequel la bobine (321) de l'électrovalve (32) n'est pas alimentée, une extrémité de queue de l'obus de valve (322) de l'électrovalve (32) vient en butée contre la saillie (315) pour isoler la cavité de communication (311 b) de la seconde cavité de montage d'obus de valve (313).

3. Valve de régulation de débit selon la revendication 2, dans laquelle l'électrovalve (32) est une électrovalve de type à actionnement direct, et comprend un ressort de rappel (326) ; le ressort de rappel (326) coopère avec l'obus de valve (322) de l'électrovalve (32) ; dans un cas dans lequel la bobine (321) de l'électrovalve (32) est alimentée, une force électromagnétique générée par la bobine (321) de l'électrovalve (32) entraîne l'obus de valve (322) de l'électrovalve (32) afin de venir à bout d'une force élastique du ressort de rappel (326) afin de faire communiquer le second passage d'écoulement de réfrigérant avec le premier passage d'écoulement de réfrigérant ; et dans un cas dans lequel la bobine (321) de l'électrovalve (32) n'est pas alimentée, la force électromagnétique disparaît, l'obus de valve (322) de l'électrovalve (32) est comprimé contre la saillie (315) par le ressort de rappel (326) et l'obus de valve (322) de l'électrovalve (32) isole le second passage d'écoulement de réfrigérant du premier passage d'écoulement de réfrigérant.

4. Valve de régulation de débit selon la revendication 1, dans laquelle un axe de la première cavité de montage d'obus de valve (312) et un axe de la seconde cavité de montage d'obus de valve (313) sont agencés pour être perpendiculaires entre eux et la cavité de communication (311 b) fait communiquer la première cavité de montage d'obus de valve (312) avec la seconde cavité de montage d'obus de valve (313) dans un cas dans lequel la bobine (321) de l'électrovalve (32) est alimentée.

5. Valve de régulation de débit selon la revendication 1, dans laquelle une zone d'écoulement du passage d'écoulement de réfrigérant (311) au niveau du premier orifice de valve (339) est plus petite que l'une quelconque des zones d'écoulement du passage d'écoulement de réfrigérant (311) au niveau de la cavité d'entrée (311 a) et qu'une zone d'écoulement du passage d'écoulement de réfrigérant (311) au niveau de la cavité de communication (311 b).

6. Valve de régulation de débit selon l'une quelconque des revendications 1 à 5, dans laquelle le premier corps de valve (334) et le second corps de valve (324) sont formés de manière solidaire.

7. Valve de régulation de débit selon la revendication 6, dans laquelle la valve de dilatation électronique (33) comprend en outre un couvercle externe (335) pour protéger l'obus de valve de la valve de dilatation électronique (33), un tube de revêtement (336) est prévu à l'intérieur du couvercle externe (335) et le tube de revêtement (336) est agencé pour venir en butée contre une partie supérieure du couvercle externe (335), une tige de butée (337) pour limiter une course de déplacement de l'obus de valve (333) de la valve de dilatation électronique (33) est raccordée de manière fixe au tube de revêtement (336), et la tige de butée (337) est fixée au tube de revêtement (336) par soudage.

8. Système de réfrigérant adapté pour un système de climatisation de véhicule, le système de réfrigérant comprenant un compresseur (1), un condensateur (2), une valve de régulation de débit (3) et un évaporateur (4) qui sont raccordés par des conduites ; dans lequel la valve de régulation de débit (3) comprend une valve de dilatation électronique (33) pour réguler un débit et une électrovalve (32), la valve de régulation de débit (3) comprend en outre une entrée correspondant à l'électrovalve (32) et une sortie correspondant à la valve de dilatation électronique (33), une sortie du condensateur (2) est en communication avec l'entrée de la valve de régulation de débit (3), la sortie de la valve de régulation de débit (3) est en communication avec une entrée de l'évaporateur (4), une sortie de l'évaporateur (4) est en communication avec une entrée du compresseur (1), et une sortie du compresseur (1) est en communication avec une entrée du condensateur (2) et la valve de régulation de débit (3) est la valve de régulation de débit selon l'une quelconque des revendications 1 à 7.

9. Système de réfrigérant adapté au système de climatisation de véhicule selon la revendication 8, dans lequel, dans le cas dans lequel la bobine (321) de l'électrovalve (32) est alimentée, l'électrovalve (32) passe dans une position ouverte pour ouvrir le passage d'écoulement de réfrigérant de la valve de régulation de débit (3), et la valve de dilatation électronique (33) est commandée par un organe de commande (5) pour être alimentée afin d'entraîner le fonctionnement de la valve de dilatation électronique (33), pour permettre au système de climatisation de véhicule de fonctionner normalement.

10. Procédé pour commander la valve de régulation de débit selon l'une quelconque des revendications 1 à 7, dans lequel l'obus de valve (333) de la valve de dilatation électronique (33) se déplace par rapport au premier orifice de valve (339) pour réguler un degré d'ouverture du premier orifice de valve (339) et l'obus de valve (322) de l'électrovalve (32) fait communiquer le second passage d'écoulement de réfrigérant avec le premier passage d'écoulement de réfrigérant dans un cas dans lequel la bobine (321) de l'électrovalve (32) est alimentée ; et l'obus de valve (322) de l'électrovalve (32) isole le second passage d'écoulement de réfrigérant du premier passage d'écoulement de réfrigérant dans un cas dans lequel la bobine (321) de l'électrovalve (32) n'est pas alimentée, et la valve de régulation de débit est applicable à un système de climatisation de véhicule ; et
dans lequel le procédé comprend l'étape consistant à : commander la valve de régulation de débit pour fonctionner selon un programme de commande prédéterminé, dans lequel le programme de commande prédéterminé comprend les étapes consistant à : ne pas alimenter la bobine (321) de l'électrovalve (32) dans un cas dans lequel la valve de régulation de débit n'est pas alimentée pendant le fonctionnement, et isoler, grâce à l'obus de valve (322) de l'électrovalve (32), le premier passage d'écoulement de réfrigérant par rapport au second passage d'écoulement de réfrigérant.

11. Procédé pour commander la valve de régulation de débit selon la revendication 10, dans lequel le programme de commande prédéterminé comprend les programmes de commande suivants :
S1, un processus de commande pour arrêter la valve de régulation de débit ;
S2, un processus de commande pour démarrer la valve de régulation de débit ;
dans lequel S1 comprend les sous-programmes suivants :
S11, arrêter un moteur d'un véhicule dans un cas dans lequel une clé du véhicule est retirée ou est sur la position ARRET ;
S12, continuer à fournir de la puissance à l'électrovalve (32) et à la valve de dilatation électronique (33) par une batterie de stockage agencée dans le véhicule, l'électrovalve (32) étant dans un état ouvert, et ajuster pendant ce temps un degré d'ouverture de la valve de dilatation électronique (33) au maximum ; et
S13, ne pas alimenter la bobine (321) de l'électrovalve (32) ni la bobine (331) de la valve de dilatation électronique (33) dans un cas dans lequel on a détecté qu'une haute pression et une basse pression du réfrigérant aux deux extrémités de l'électrovalve (32) ont atteint un équilibre, ou bien ont atteint une différence de pression entre le côté haute pression et le côté basse pression qui peut être maîtrisée par l'électrovalve (32) et isoler, grâce à l'obus de valve (322) de l'électrovalve (32), le premier passage d'écoulement de réfrigérant du second passage d'écoulement de réfrigérant ; et
dans lequel S2 comprend les sous-programmes suivants :
S21, tourner la clé du véhicule et démarrer le moteur ;
S22, alimenter un organe de commande pour commander le fonctionnement de la valve de régulation de débit, et commander, grâce à l'organe de commande, l'électrovalve (32) pour qu'elle soit alimentée afin de déplacer l'obus de valve (322) de l'électrovalve (32), pour faire communiquer le premier passage d'écoulement de réfrigérant avec le second passage d'écoulement de réfrigérant ; et
S23, commander, grâce à l'organe de commande, la valve de dilatation électronique (33) pour qu'elle soit alimentée afin d'entraîner le fonctionnement de la valve de dilatation électronique (33), pour permettre au système de climatisation de véhicule de fonctionner normalement.

12. Procédé pour commander la valve de régulation de débit selon la revendication 10 ou 11, dans lequel les programmes de commande de la valve de régulation de débit sont stockés dans un organe de commande de la valve de régulation de débit ou un organe de commande du véhicule ; dans un cas dans lequel les programmes de commande sont stockés dans l'organe de commande du véhicule, l'organe de commande de la valve de régulation de débit est en communication avec l'organe de commande du véhicule par un signal de modulation d'impulsions en durée (PWM) ou un signal du réseau d'interconnexion local (LIN).

13. Procédé pour commander la valve de régulation de débit selon la revendication 10 ou 11, dans lequel le programme de commande prédéterminé comprend en outre les programmes de commande suivants :
dans un cas dans lequel la valve de régulation de débit n'est brusquement plus alimentée en raison d'une défaillance du véhicule, ne pas alimenter la bobine (321) de l'électrovalve (32) afin d'isoler le premier passage d'écoulement de réfrigérant du second passage d'écoulement de réfrigérant ; et
dans un cas dans lequel la valve de régulation de débit n'est brusquement plus alimentée en raison de la défaillance du véhicule, et que la bobine (321) de l'électrovalve (32) n'est plus alimentée, fermer la valve par une fonction d'arrêt rapide de la valve de dilatation électronique (33), pour isoler le passage d'écoulement de réfrigérant.
